(19) Europäisches Patentamt

European Patent Office

Office européen des brevets

(11) **EP 1 009 053 A1**

(12) **EUROPÄISCHE PATENTANMELDUNG**

(43) Veröffentlichungstag:
**14.06.2000 Patentblatt 2000/24**

(51) Int. Cl.⁷: **H01M 8/04**

(21) Anmeldenummer: **99121533.6**

(22) Anmeldetag: **29.10.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **08.12.1998 DE 19856499**

(71) Anmelder: **DaimlerChrysler AG
70567 Stuttgart (DE)**

(72) Erfinder:
- **Berg, Falko
  73230 Kirchheim-Nabern (DE)**
- **Geiser, Robert
  10823 Berlin (DE)**
- **Kising, Michael, Dr.
  15806 Gross-Machnow (DE)**
- **Pfeffer, Viktor
  73760 Ostfildern (DE)**
- **von Esebeck, Götz, Dr.
  15831 Mahlow (DE)**
- **Wirbeleit, Friedrich, Dr.
  73733 Esslingen (DE)**

(54) **Verfahren und Vorrichtung zur zweistufigen Aufladung von Prozessluft für eine
Brennstoffzelle**

(57)   Die Erfindung betrifft ein Verfahren zur zweistufigen Aufladung von Prozeßluft für eine Brennstoffzelle
(BZ), wobei, in einer der beiden Ladestufen die Aufladung mittels einer Verdrängermaschine (ML) erfolgt,
und in der anderen Ladestufe die Aufladung mittels
einer kombinierten Expansions- und Kompressionsmaschine (ATL,COM) erfolgt, wobei mit dieser eine Energierückgewinnung aus dem Abgas der Brennstoffzelle
(BZ) erfolgt.

Fig. 1

**Beschreibung**

Die Erfindung betrifft ein Verfahren sowie eine Vorrichtung zur zweistufigen Aufladung von Prozeßluft für eine Brennstoffzelle.

Aus der **DE 43 18 818 A1** ist ein Brennstoffzellensystem bekannt, bei dem die Prozeßluft mit einem Kompressor verdichtet wird. Zur Energierückgewinnung wird das Brennstoffzellenabgas einem Expander zugeführt, der über eine Welle mit dem Kompressor gekoppelt ist. Sowohl Verdichter als auch Expander arbeiten nach dem Verdrängerprinzip und sind insbesondere als Drehkolbenmaschinen ausgebildet. Nachteilig an dieser Vorrichtung ist die Tatsache, das es für Brennstoffzellensysteme, bei denen das Brenngas erst durch Reformierung von Methanol erzeugt werden muß, nicht geeignet ist. Bei derartigen Brennstoffzellensystemen beträgt die Abgastemperatur typischerweise 350°C. Diese Temperaturen sind für eine Verdrängermaschine nur noch sehr eingeschränkt verträglich.

Aus der **US 4,838,020** ist ein Brennstoffzellensystem bekannt, bei dem die Prozeßluft mittels eines Abgasturboladers aufgeladen wird. Die der Brennstoffzelle zuzuführende Prozeßluft wird mittels eines Kompressors verdichtet. Zur Energierückgewinnung aus dem Brennstoffzellenabgas wird dieses auf eine Turbine geleitet die mit dem Kompressor mechanisch gekoppelt ist. In der Abgasleitung ist außerdem ein katalytischer Brenner angeordnet, der den Energieinhalt des an die Turbine geleiteten Abgases erhöht.

In der älteren, aber nicht vorveröffentlichten Patentanmeldung **DE 197 55 116.5** ist ein Brennstoffzellensystem mit einer zweistufigen Aufladung beschrieben. In beiden Stufen wird eine Expansionsmaschine eingesetzt. Dabei wird die Turbine der ersten Stufe mit dem Abgas der Brennstoffzelle betrieben. In der Abgasleitung ist außerdem ein katalytischer Brenner angeordnet, der den Energieinhalt des an die Turbine geleiteten Abgases erhöht. Die Turbine der zweiten Stufe wird durch Expansion des unter hohem Druck stehenden Gases aus der Hochdruckerzeugungseinheit des Brennstoffzellensystems betrieben.

Es ist Aufgabe der Erfindung, ein Verfahren sowie eine Vorrichtung zur zweistufigen Aufladung von Prozeßluft für eine Brennstoffzelle zu schaffen, mit dem ein hohes Druckverhältnis sowie ein hoher Wirkungsgrad erreicht wird.

Diese Aufgabe wird mit dem Verfahren nach Patentanspruch 1 sowie der Vorrichtung nach Patentanspruch 10 gelöst. Vorteilhafte Ausführungen der Erfindung sind Gegenstand von Unteransprüchen.

Gemäß der Erfindung geschieht die Aufladung der Brennstoffzellen-Prozeßluft in zwei Schritten. Dabei erfolgt in einer der beiden Ladestufen die Aufladung mittels einer Verdrängermaschine. In der anderen Ladestufe erfolgt die Aufladung mittels einer kombinierten Expansions- und Kompressionsmaschine. Dabei wir die Expansion des Brennstoffzellenabgases für die Kompression der Ladeluft eingesetzt, so daß eine Energierückgewinnung aus dem Abgas ermöglicht wird.

Bei einer mehrstufigen Aufladung ergibt sich das Gesamtdruckverhältnis $\pi_{ges}$ als Produkt der Druckverhältnisse $\pi 1$, $\pi 2$ der beiden Verdichterstufen:

$$\pi_{ges} = \pi_1 {}^* \pi_2.$$

Unter einer Verdrängermaschine ist ein Verdichter zu verstehen, der das Fördermittel (Gas oder Gasgemische) durch die Vergrößerung des Arbeitsraums (z.B. Zylinder) ansaugt, und es durch eine sich anschließende Verkleinerung des Arbeitsraums verdrängt. Durch diese Bewegung wird der Druck des Fördermittels erhöht. Hauptbauelement der Verdrängermaschine ist ein Kolben. Je nach Bewegungsart dieses Kolbens werden deshalb Verdrängermaschinen in Hubkolben- oder in Drehkolbenmaschinen unterschieden. Je nachdem, ob das Fördermedium in oder außerhalb der Maschine verdichtet wird, unterscheidet man Maschinen mit oder ohne innere Verdichtung. Verdrängermaschinen werden auch als mechanische Lader bezeichnet, weil die das Fördermittel unter Einsatz von mechanischer Energie verdichten.

Bei einer kombinierten Expansions- und Kompressionsmaschine wird in einem kontinuierlichen Gasstrom Geschwindigkeitsenergie in Druckenergie umgesetzt. Sie arbeitet bei hohen Drehzahlen und hohen Temperaturen. Gemäß der Erfindung wird insbesondere ein Abgasturbolader oder ein Druckwellenlader (in der Literatur oft auch als Comprex**®** bezeichnet) eingesetzt.

Vorteile der Erfindung:

-    Es wird ein hohes Druckverhältnis erzielt, und zwar ohne daß man wie in der Patentanmeldung **DE 197 55 116.5** auf das Vorhandensein eines Hochdruckgaserzeugungssystems angewiesen wäre.
-    Eine Energierückgewinnung aus dem Abgas der Brennstoffzelle ist möglich.
-    Es wird ein hoher Wirkungsgrad erzielt.
-    Die Erfindung kann auch bei hohen Abgastemperaturen eingesetzt werden. Sie kann deshalb insbesondere bei Methanolbrennstoffzellensystemen angewandt werden, bei denen das Brenngas durch Methanolreformierung erzeugt wird.
-    Gegenüber einer einstufigen Aufladung mittels eines Abgasturboladers wird eine größere Flexibilität hinsichtlich der Bauraumaufteilung der einzelnen Komponenten erreicht.
-    Das System kann absolut ölfrei realisiert werden. Dies ist bei einem Brennstoffzellensystem von wesentlicher Bedeutung, da die Brennstoffzelle durch das Öl zerstört bzw. in ihrer Leistungsfähigkeit eingeschränkt wird.

Die Erfindung kann für sämtliche Arten von Brennstoffzellensystemen eingesetzt werden. Sie eignet sich insbesondere für mobile Anwendungen, z.B. in einem Kraftfahrzeug oder in Bahnsystemen.

Die Erfindung wird anhand von Ausführungsbeispielen unter Bezugnahme auf Zeichnungen näher erläutert. Es zeigen:

Fig. 1    eine erste erfindungsgemäße Ausführung mit einem Abgasturbolader in der ersten Ladestufe;

Fig. 2    eine zweite erfindungsgemäße Ausführung mit einem Comprex-Verdichter in der ersten Ladestufe.

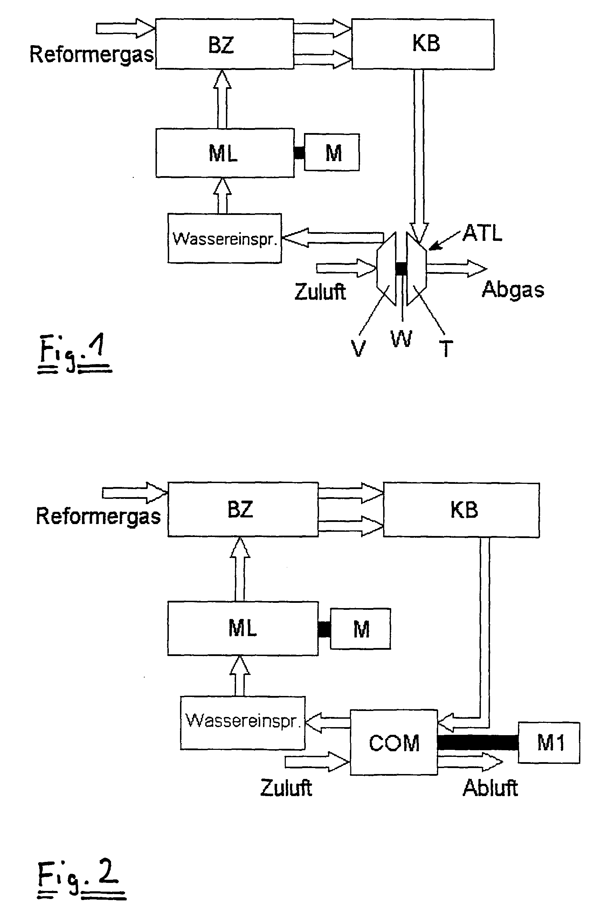

Fig. 1 zeigt eine erste beispielhafte Ausführung der Erfindung. Dargestellt ist ein Brennstoffzellensystem, bei dem das aus der Reformierung von Methanol gewonnene Brenngas ($H_2$) auf der Anodenseite der Brennstoffzelle BZ eingeleitet wird. In einer alternativen Ausführung kann das Brenngas auch aus einem mitgeführten Container der Brennstoffzelle zugeführt werden.

Die auf der Kathodenseite der Brennstoffzelle BZ zugeführte Prozeßluft wird in zwei Stufen aufgeladen. In der ersten Stufe dient ein Abgasturbolader ATL für die Vorverdichtung der Ladeluft (Boost-Stufe). Der Abgasturbolader ATL kann ein herkömmlicher Turbolader sein, wie er in Verbrennungsmotoren häufig Anwendung findet. Er umfaßt eine Turbine T sowie einen Verdichter V, wobei Turbine T und Verdichter V auf einer gemeinsamen Welle W angeordnet sind. Die Geometrie der Turbine T kann entsprechend dem gegebenen Anwendungsfall variabel eingestellt werden. An der Turbine T wird das Abgas der Brennstoffzelle BZ expandiert. Die auf diese Weise rückgewonnene Energie wird über die Welle W dem Verdichter V des Turboladers ALT direkt zugeführt.

In der zweiten Ladestufe wird ein mechanischer Lader ML, z.B. ein Drehkolbenverdichter, eingesetzt. Er wird von einem Elektromotor M angetrieben.

Da der Abgasturbolader ATL den Vordruck in Abhängigkeit vom Abgasmassenstrom und somit von der Drehzahl aufbaut, wird im unteren Lastbereich der Enddruck eher zu niedrig sein, während er im oberen Bereich höher ist als benötigt. Dem kann man durch eine waste-gate-Regelung entgegenwirken, indem man ein Überdruckventil vorsieht. Das Überdruckventil bzw. das waste-gate wird hinter dem mechanischen Lader ML angeordnet. Durch dieses Ventil wird der Druck nach oben begrenzt, d.h. die Ladeluft wird von dem mechanischen Lader zwar höher verdichtet, jedoch wird der zuviel gelieferte Druck "abgeblasen". Die überschüssig geförderte Luft wird direkt der Expansionsmaschine des Turboladers ATL zugeführt.

Die verdichtete Prozeßluft wird auf der Kathodenseite in die Brennstoffzelle BZ eingeleitet, die zum Beispiel als PEM-Brennstoffzelle (Proton-Exchange-Membran) ausgebildet sein kann.

Zwischen erster und zweiter Ladestufe erfolgt eine Wassereinspritzung zur Befeuchtung der Ladeluft, wie sie bei PEM-Brennstoffzellen üblicherweise vorgesehen wird. Das Anoden- und/oder das Kathodenabgas wird nach Verlassen der Brennstoffzelle BZ in einen katalytischen Brenner KB geleitet. Der katalytische Brenner KB dient als Wärmequelle des Brennstoffzellensystems. Das Abgas des katalytischen Brenners KB, das beim Verlassen des katalytischen Brenners KB eine Temperatur von ca. 350°C aufweist, wird an die Turbine T geführt. Diese Verfahrensführung hat den Vorteil, daß der Turbine T ein wesentlich größerer Massenstrom zugeführt wird, der zudem eine höhere Temperatur aufweist.

In einer weiteren, hier nicht dargestellten Ausführung, kann das Abgas der Brennstoffzelle (Anodenabgas und/oder Kathodenabgas) auch ohne Zwischenschaltung des katalytischen Brenners direkt an die Turbine des Turboladers geleitet werden.

Es wird außerdem darauf hingewiesen, daß alternativ zu der gezeigten Ausführung der mechanische Lader ML auch in der ersten Stufe eingesetzt werden kann, während die kombinierte Expansions- und Kompressionsmaschine ATL die zweite Ladestufe bildet.

Fig. 2 zeigt eine weitere Ausführung der Erfindung. Sie unterscheidet sich gegenüber der Ausführung nach Fig. 1 nur dadurch, daß an Stelle des Abgasturboladers ein Druckwellenlader COM eingesetzt wird. Dieser kann ein herkömmlicher Druckwellenlader sein, wie er in Verbrennungsmotoren häufig Anwendung findet. In einem Druckwellenlader wird - wie in einem Abgasturbolader, aber auf einem gänzlich anderen Prinzip - die Energie der Abgase zur Verdichtung der Ladeluft benützt. Die Wirkungsweise eines Druckwellenladers beruht darauf, daß eine durch eine Leitung laufende Druckwelle an einem offenen Ende negativ, d.h. als Unterdruckwelle, reflektiert wird, an einem geschlossenen Ende aber als Druckwelle reflektiert wird. Umgekehrt wird eine Saugwelle am offenen Ende als Druckwelle und am geschlossenen als Saugwelle reflektiert. Der Druckwellenlader, dessen Aufbau in der Fig. 2 nicht im einzelnen wiedergegeben ist, besteht aus einem Zellenrad, mit auf dem Umfang angeordneten, stirnseitig offenen Kanälen mit trapezförmigem Querschnitt. Das Zellenrad ist in einem Gehäuse gelagert und von einem Mantel berührungsfrei umschlossen. Es wird von dem Motor M1 angetrieben. Die Antriebsleistung ist jedoch gering (ca. 300 bis 400 Watt), es müssen nur Lager- und Ventilationsverluste überwunden werden.

Wie bei der in Fig. 1 gezeigten Ausführung kann eine waste-gate-Regelung vorhanden sein, indem das Überdruckventil bzw. das waste-gate hinter dem mechanischen Lader ML angeordnet wird. Die überschüssig geförderte Luft wird direkt dem Druckwellenlader COM zugeführt.

Die dargestellte Ausführung hat gegenüber der in Fig. 1 gezeigten Ausführung den Vorteil, daß das Verhalten der beiden Lader wesentlich besser aufeinander abgestimmt werden kann.

In einer vorteilhaften Weiterbildung kann der Rotor des Druckwellenladers COM mit sogenannten Registem versehen werden, wie in der WO 97/20134 beschrieben. Dabei wird die Rotorfläche nach einem vorbestimmten Verhältnis auf die einzelnen Register aufgeteilt, z.B. zu 1/3 und 2/3, um drei Schaltstellungen in Abhängigkeit vom Massenstrom realisieren zu können. Dadurch wird der Regelbereich des Druckwellenladers entsprechend verdreifacht.

**Patentansprüche**

1. Verfahren zur zweistufigen Aufladung von Prozeßluft für eine Brennstoffzelle (BZ), **dadurch gekennzeichnet**, daß in einer der beiden Ladestufen die Aufladung mittels einer Verdrängermaschine (ML) erfolgt, und in der anderen Ladestufe die Aufladung mittels einer kombinierten Expansions- und Kompressionsmaschine (ATL,COM) erfolgt, wobei mit dieser eine Energierückgewinnung aus dem Abgas der Brennstoffzelle (BZ) erfolgt.

2. Verfahren nach Anspruch 1, dadurch gekennzeichnet, daß als kombinierte Expansions- und Kompressionsmaschine ein Druckwellenlader (COM) eingesetzt wird.

3. Verfahren nach Anspruch 2, dadurch gekennzeichnet, daß die Rotorfläche des Druckwellenladers (COM) zu 1/3 und 2/3 in verschiedene Register unterteilt ist.

4. Verfahren nach Anspruch 1, dadurch gekennzeichnet, daß als kombinierte Expansions- und Kompressionsmaschine ein Abgasturbolader (ATL) eingesetzt wird.

5. Verfahren nach Anspruch 4, dadurch gekennzeichnet, daß der Abgasturbolader (ATL) eine variable Turbinengeometrie aufweist.

6. Verfahren nach einem der vorangehenden Ansprüche, dadurch gekennzeichnet, daß das Kathodenabgas und/oder das Anodenabgas der Brennstoffzelle (BZ) einem katalytischen Brenner (KB) zugeführt werden, und das Abgas des katalytischen Brenners (KB) der kombinierten Expansions- und Kompressionsmaschine (ATL,COM) zugeführt wird.

7. Verfahren nach Anspruch 1, dadurch gekennzeichnet, daß als Verdrängermaschine (ML) ein Hubkolben- oder Drehkolbenverdichter eingesetzt wird.

8. Verfahren nach einem der vorangehenden Ansprüche, dadurch gekennzeichnet, daß stromabwärts zur Verdrängermaschine (ML) in der Ladeluftleitung ein Überdruckventil zur Druckbegrenzung vorhanden ist.

9. Verfahren nach Anspruch 8, dadurch gekennzeichnet, daß die über das Überdruckventil abgelassene Luft der kombinierten Expansions- und Kompressionsmaschine (ATL,COM) zugeführt wird.

10. Vorrichtung zur zweistufigen Aufladung von Prozeßluft für eine Brennstoffzelle (BZ), **dadurch gekennzeichnet**, daß in einer der beiden Ladestufen eine Verdrängermaschine (ML) vorhanden ist, und in der anderen Ladestufe eine kombinierte Expansions- und Kompressionsmaschine (ATL,COM) vorhanden ist, mit der eine Energierückgewinnung aus dem Abgas der Brennstoffzelle (BZ) ermöglicht wird.

Reformergas → BZ → KB

ML — M

Wassereinspr. ← (Zuluft, ATL, V W T) → Abgas

**Fig. 1**

Reformergas → BZ → KB

ML — M

Wassereinspr. ← COM — M1

Zuluft → COM → Abluft

**Fig. 2**

Europäisches
Patentamt

## EUROPÄISCHER RECHERCHENBERICHT

Nummer der Anmeldung

EP 99 12 1533

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 013, no. 109 (E-727), 15. März 1989 (1989-03-15) & JP 63 281363 A (ISHIKAWAJIMA HARIMA HEAVY IND CO LTD), 17. November 1988 (1988-11-17) * Zusammenfassung * | 1-10 | H01M8/04 |
| A | US 4 759 997 A (OHYAUCHI HIDEO ET AL) 26. Juli 1988 (1988-07-26) * Ansprüche 1-6 * | 1-10 | |
| A | DE 42 01 795 A (SIEMENS AG) 29. Juli 1993 (1993-07-29) * Ansprüche 1-10 * | 1-10 | |
| A | US 4 595 642 A (NAKANISHI KENICHI ET AL) 17. Juni 1986 (1986-06-17) * Ansprüche 1,2 * | 1-10 | |
| | | | RECHERCHIERTE SACHGEBIETE (Int.Cl.7) |
| | | | H01M |

Der vorliegende Recherchenbericht wurde für alle Patentansprüche erstellt

| Recherchenort | Abschlußdatum der Recherche | Prüfer |
|---|---|---|
| DEN HAAG | 17. März 2000 | Battistig, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C09)

## ANHANG ZUM EUROPÄISCHEN RECHERCHENBERICHT
## ÜBER DIE EUROPÄISCHE PATENTANMELDUNG NR.

EP 99 12 1533

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2000

| Im Recherchenbericht angeführtes Patentdokument | Datum der Veröffentlichung | Mitglied(er) der Patentfamilie | | Datum der Veröffentlichung |
|---|---|---|---|---|
| JP 63281363 A | 17-11-1988 | KEINE | | |
| US 4759997 A | 26-07-1988 | JP | 1965760 C | 25-08-1995 |
| | | JP | 6103631 B | 14-12-1994 |
| | | JP | 62170169 A | 27-07-1987 |
| DE 4201795 A | 29-07-1993 | KEINE | | |
| US 4595642 A | 17-06-1986 | JP | 1653409 C | 30-03-1992 |
| | | JP | 3016751 B | 06-03-1991 |
| | | JP | 61071561 A | 12-04-1986 |
| | | DE | 3532835 A | 27-03-1986 |

EPO FORM P0461

Für nähere Einzelheiten zu diesem Anhang : siehe Amtsblatt des Europäischen Patentamts, Nr.12/82